# EUROPEAN PATENT SPECIFICATION

(11) **EP 4 531 133 B1**
(45) Date of publication and mention of the grant of the patent: **18.11.2026**
(21) Application number: 24178303.4
(22) Date of filing: 27.05.2024
(51) Int. Cl.: H01M 4/136, H01M 4/36, H01M 4/58, H01M 4/62, H01M 10/0525, H01M 4/02

(54) **POSITIVE ELECTRODE FOR RECHARGEABLE LITHIUM BATTERY AND RECHARGEABLE LITHIUM BATTERY INCLUDING SAME**
POSITIVELEKTRODE FÜR EINE WIEDERAUFLADBARE LITHIUMBATTERIE UND WIEDERAUFLADBARE LITHIUMBATTERIE DAMIT
ÉLECTRODE POSITIVE POUR BATTERIE AU LITHIUM RECHARGEABLE ET BATTERIE AU LITHIUM RECHARGEABLE LA COMPRENANT

(30) Priority: 26.09.2023 KR 20230129506
(43) Date of publication of application: 02.04.2025
(73) Proprietor: Samsung SDI Co., Ltd., Yongin-si, Gyeonggi-do 17084 (KR)
(72) Inventor: SUH, Soonsung, 17084 Yongin-si, Gyeonggi-do (KR); KWON, Seunguk, 17084 Yongin-si, Gyeonggi-do (KR); LEE, Jinhyon, 17084 Yongin-si, Gyeonggi-do (KR)
(74) Representative: Michalski Hüttermann & Partner mbB

(56) References cited:
- WO-A1-2023/121397
- US-A1- 2012 202 113
- US-A1- 2023 108 289
- US-A1- 2023 115 744
- US-A1- 20240 194 872

## Description

### BACKGROUND

### 1. Field

According to one or more embodiments, the present disclosure relates to a positive electrode for a rechargeable lithium battery, and a rechargeable lithium battery including the same.

### 2. Description of the Related Art

In order to achieve relatively high performance of one or more suitable devices (e.g., consumer electronic), it is becoming important to have a relatively high energy density (or battery energy density) for rechargeable batteries. For example, a rechargeable lithium battery with suitable discharge voltage and relatively high energy density is becoming more important or desirable.

An electrode for the rechargeable lithium battery may be prepared by utilizing a wet process or a dry process. Therefore, it is desirable to conduct further investigation into the dry process, which is a relatively simple process giving its possible higher capacity.

### SUMMARY

One or more aspects are directed toward a positive electrode for a rechargeable lithium battery exhibiting high energy density.

One or more aspects are directed toward a rechargeable lithium battery including the positive electrode.

One or more aspects are directed toward a positive electrode for a rechargeable lithium battery including a dry positive active material layer including a positive active material of a large-particle lithium iron phosphate particle and a small-particle lithium iron phosphate particle; and a polytetrafluoroethylene binder. Batteries are *inter alia* disclosed in the WO 2023/121397, US 2024/194872, US 2023/108289, US 2023/115744 and US 2012/202113.

One or more aspects are directed toward a rechargeable lithium battery including the positive electrode, a negative electrode, and a non-aqueous electrolyte.

Additional aspects are included in the following detailed description and, in part, will be apparent from the description, or may be learned by practice of the presented embodiments of the disclosure.

A positive electrode for a rechargeable lithium battery according to one or more embodiments may exhibit relatively high energy density.

### BRIEF DESCRIPTION OF THE DRAWINGS

FIG. 1 shows a partial cross-sectional view of a rechargeable lithium battery as a cylindrical battery according to one or more embodiments of the present disclosure.
FIG. 2 shows a cross-sectional view of a rechargeable lithium battery as a prismatic battery according to one or more embodiments of the present disclosure.
FIG 3 shows a rechargeable lithium battery as a pouch-type or kind battery according to one or more embodiments of the present disclosure.
FIG. 4 shows an exploded view of a rechargeable lithium battery as a pouch-type or kind battery according to one or more other embodiments of the present disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may not be provided. Unless otherwise noted, like reference numerals, characters, or combinations thereof denote like elements throughout, and duplicative descriptions thereof may not be provided the attached drawings and the written description, and thus, repeated descriptions thereof may not be provided.

The described embodiments may have one or more suitable modifications and may be embodied in different forms, and should not be construed as being limited to only the illustrated embodiments herein. The utilization of "can," "may," or "may not" in describing some embodiments corresponds to one or more embodiments of the present disclosure. The present disclosure covers all modifications, equivalents, and replacements within the idea and technical scope of the present disclosure. Further, each of the features of the one or more suitable embodiments of the present disclosure may be combined with each other, in part or in whole, and technically one or more suitable interlocking and driving are possible. Each embodiment may be implemented independently of each other or may be implemented together in an association.

In the drawings, the relative sizes of elements, layers, and regions may be exaggerated for clarity and/or descriptive purposes. Additionally, the utilization of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, and/or the like, of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

In the drawings, the thicknesses of layers and regions are exaggerated or reduced for clarity. Spatially relative terms, such as "beneath," "below," "lower," "lower side," "under," "above," "upper," "upper side," and/or the like, may be utilized herein for ease of explanation to describe one element or feature's relationship to another element(s) or feature(s) as illustrated in the drawings. It will be understood that the spatially relative terms are intended to encompass different orientations of the device in utilization or in operation, in addition to the orientation depicted in the drawings. For example, if (e.g., when) the device in the drawings is turned over, elements described as "below," "beneath," "or "under" other elements or features would then be oriented "above" the other elements or features. Thus, the example terms "below" and "under" can encompass both (e.g., simultaneously) an orientation of above and below. The device may be otherwise oriented (e.g., rotated 90 degrees or at other orientations) and the spatially relative descriptors utilized herein should be interpreted accordingly. Similarly, if (e.g., when) a first part is described as being arranged "on" a second part, this indicates that the first part is arranged at an upper side or a lower side of the second part without the limitation to the upper side thereof on the basis of the gravity direction.

It will be understood that if (e.g., when) an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In some embodiments, this may collectively refer to a direct or indirect coupling or connection and an integral or non-integral coupling or connection. For example, if (e.g., when) a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In some embodiments, in the present specification, if (e.g., when) a portion of a layer, a film, an area, a plate, and/or the like is formed on another portion, a forming direction is not limited to an upper direction but includes forming the portion on a side surface or in a lower direction. In contrast, if (e.g., when) a portion of a layer, a film, an area, a plate, and/or the like is formed "under" another portion, this includes not only a case where the portion is "directly beneath" another portion but also a case where there is further another portion between the portion and another portion. In some embodiments, other expressions describing relationships between components, such as "between," "immediately between" or "adjacent to" and "directly adjacent to," may be construed similarly. It will be understood that if (e.g., when) an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of," or "selected from," if (e.g., when) preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As utilized herein, "or" generally refers to "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, if (e.g., when) preceding a list of elements, modify the entire list of elements and do not modify the individual elements of the list. Herein, "or" is not to be construed as an exclusive meaning, for example, "A or B" is construed to include A, B, A+B, and/or the like.

It will be understood that, although the terms "first," "second," "third," and/or the like, may be utilized herein to describe one or more suitable elements, components, regions, layers and/or sections, these elements, components, regions, layers and/or sections should not be limited by these terms. These terms do not correspond to a particular order, position, or superiority, and are only utilized to distinguish one element, member, component, region, area, layer, section, or portion from another element, member, component, region, area, layer, section, or portion. Thus, a first element, component, region, layer or section could be termed a second element, component, region, layer or section, without departing from the spirit and scope of the present disclosure. The description of an element as a "first" element may not require or imply the presence of a second element or other elements. The terms "first," "second," and/or the like may also be utilized herein to differentiate different categories or sets of elements. For conciseness, the terms "first," "second," and/or the like may represent "first-category (or first-set)," "second-category (or second-set)," and/or the like, respectively.

The terminology utilized herein is for the purpose of describing embodiments only and is not intended to be limiting of the present disclosure. As utilized herein, the singular forms "a" and "an" are intended to include the plural forms as well, while the plural forms are also intended to include the singular forms, unless the context clearly indicates otherwise. It will be further understood that the terms "comprises," "includes," "comprising," "including," has," "have," "having," "include," and "comprise," if (e.g., when) utilized in this specification, specify the presence of the stated features, integers, steps, operations, elements, and/or components, but do not preclude the presence or addition of one or more other features, integers, steps, operations, elements, components, and/or groups thereof. The term "combination thereof may include a mixture, a laminate, a complex, a copolymer, an alloy, a blend, a reactant of constituents.

As utilized herein, the term "substantially," "about," "approximately," and similar terms are utilized as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as utilized herein, is inclusive of the stated value and refers to within an acceptable range of deviation for the particular value as determined by one of ordinary skill in the art, considering the measurement in question and the error associated with measurement of the particular quantity (i.e., the limitations of the measurement system). For example, "about" may refer to within one or more standard deviations, or within ± 30%, 20%, 10%, 5% of the stated value. Further, the utilize of "may" if (e.g., when) describing embodiments of the present disclosure refers to "one or more embodiments of the present disclosure."

The term "combination thereof" may include a mixture, a laminate, a complex, a copolymer, an alloy, a blend, a reactant of constituents.

In some embodiments, herein, "layer" includes a shape totally formed on the entire surface or a shape partial surface, if (e.g., when) viewed from a plane view.

Unless otherwise defined, all terms (including chemical, technical and scientific terms) utilized herein have the same meaning as commonly understood by one of ordinary skill in the art to which the present disclosure belongs. It will be further understood that terms, such as those defined in commonly utilized dictionaries, should be interpreted as having a meaning that is consistent with their meaning in the context of the relevant art and/or the present specification, and should not be interpreted in an idealized or overly formal sense, unless expressly so defined herein.

Unless otherwise defined in the specification, particle diameter or size may be an average particle diameter. The average particle diameter indicates an average particle diameter (D50) where a cumulative volume is about 50 volume% in a particle size distribution. The particle size (D50) may be measured, for example, by a particle size analyzer, or by a transmission electron microscopic image, or a scanning electron microscopic image. In some embodiments, a dynamic light-scattering measurement device is utilized to perform a data analysis, and the number of particles is counted for each particle size range, and from this, the average particle diameter (D50) value may be easily obtained through a calculation. Also, depending on context, when particles are spherical, "diameter" indicates a particle diameter or an average particle diameter, and when the particles are non-spherical, the "diameter" indicates a major axis length or an average major axis length. The terms "fibril" or "fibrils" as utilized herein refer to one or more discrete individual units of a substance that is smaller than a fiber of said substance. As utilized herein, the terms "fibrillized" and "fibrillize" refer to a process of converting (e.g., by grinding or pulverizing) fibers of a substance into individual units (i.e., fibrils) of said substance that are smaller than the fibers.

In this context, "consisting essentially of" means that any additional components will not materially affect the chemical, physical, optical or electrical properties of the semiconductor film. In present disclosure, "not include a or any 'component'" "exclude a or any 'component'", "'component'-free", and/or the like refers to that the "component" not being added, selected or utilized as a component in the composition or structure, but the "component" of less than a suitable amount may still be included due to other impurities and/or external factors.

Further, in this specification, the phrase "on a plane," or "plan view," means viewing a target portion from the top, and the phrase "on a cross-section" means viewing a cross-section formed by vertically cutting a target portion from the side.

### Positive electrode

A positive electrode for a rechargeable lithium battery, according to one or more embodiments, includes a dry positive active material layer including a positive active material of a large-particle lithium iron phosphate particle and a small-particle lithium iron phosphate particle, and includinga polytetrafluoroethylene binder.

Such a positive electrode refers to a positive electrode prepared by a dry process not utilizing (e.g., excluding) a solvent in the positive electrode preparation process, as opposed to being prepared by a wet process.

In one or more embodiments, the positive active material is lithium iron phosphate particles, and includes two types (kinds) of lithium iron phosphate particles with different particle sizes from each other. For example, the positive active material may be a large-particle lithium iron phosphate particle and/or a small-particle lithium iron phosphate particle.

In one or more embodiments, a size of the large-particle lithium iron phosphate particle may be larger than a size of the small-particle lithium iron phosphate particle. The size may be the average particle diameter of the lithium iron phosphate particle and the average particle diameter may be the average particle diameter (D50).

The inclusion of the large-particle lithium iron phosphate and the small-particle lithium iron phosphate as the positive active material may provide a positive electrode suitable for a dry battery. In one or more embodiments, a positive electrode with a relatively high energy density may be achieved or realized. If (e.g., when) a positive active material layer is prepared by a wet process utilizing a lithium iron phosphate particle positive active material with a solvent, the amount of the lithium iron phosphate particles capable of coating (e.g., a current collector) may be relatively low. As a result, a loading level (e.g., of the lithium iron phosphate particle positive active material) may not be increased or improved, thus failing to obtain a positive electrode having high energy density. The positive electrode according to one or more embodiments is a dry positive electrode that may improve the loading level, and that may achieve or realize the positive electrode with a high energy density.

If (e.g., when) the large-particle lithium iron phosphate particle or the small-particle lithium iron phosphate particle is only (e.g., alone) utilized as the positive active material, (e.g., together with a polytetrafluoroethylene binder to prepare a dry positive electrode), the adherence to the current collector may be deteriorated. For example, the coating of lithium iron phosphate (e.g., on the current collector) may be non-uniformly applied or occurred, if (e.g., when) a positive electrode with a large area is prepared.

In one or more embodiments, a mixing ratio of the large-particle lithium iron phosphate particle and the small-particle lithium iron phosphate particle may be a weight ratio of about 99:1 to about 60:40, a weight ratio of about 95:5 to about 65:35, a weight ratio of about 80:20 to about 60:40 or, a weight ratio of about 80:20 to about 70:30. If (e.g., when) the mixing ratio of the large-particle lithium iron phosphate particle and the small-particle lithium iron phosphate particle is within the corresponding range, a dry positive active material layer may be better prepared, and a positive electrode with higher energy density may be obtained.

In one or more embodiments, a ratio of a size of the large-particle lithium iron phosphate particle and a size of the small-particle lithium iron phosphate particle may be about 1.5:1 to about 19:1, about 1.5:1 to about 10:1, or about 2:1 to about 10:1. If (e.g., when) the ratio of the size of the large-particle lithium iron phosphate particle and the size of the small-particle lithium iron phosphate particle is within the described corresponding range, a positive electrode having suitably high current density, for example, a current density of about at least 5 milliampere hour per square centimeter (mAh/cm²), may be prepared. In some embodiments, if (e.g., when) the ratio of sizes of the two lithium iron phosphate particles is within the described corresponding range, a much thicker dry positive electrode may be prepared.

The size of the large-particle lithium iron phosphate particle may be about 2.5 micrometer (µm) to about 20 µm, about 2.5 µm to about 15 µm, or about 5 µm to about 15 µm.

The size of the small-particle lithium iron phosphate particle may be about 0.1 µm to about 2.5 µm, about 0.1 µm to about 2 µm, or about 0.5 µm to about 2.0 µm.

For example, if (e.g., when) the ratio of sizes of the large-particle lithium iron phosphate particle and the small-particle lithium iron phosphate particle satisfies the described corresponding range, and if (e.g., when) the sizes (e.g., individual sizes) of the large-particle lithium iron phosphate particle and the small-particle lithium iron phosphate particle each satisfy the described corresponding range, then a shear stress may be sufficiently imparted to the binder (i.e., polytetrafluoroethylene binder) utilized in a dry positive electrode preparation. For example, the described sizes and ratio may enable preparation of a dry positive electrode, wherein high loading level and high energy density of the dry positive electrode may be obtained. In some embodiments, high loading level and high energy density of the dry positive electrode may be obtained even if (e.g., when, or though) the lithium iron phosphate positive active material that is utilized generally has low energy density.

In one or more embodiments, the large-particle lithium iron phosphate particle and the small-particle lithium iron phosphate particle may be the same or different from each other. For example, at least one selected from among the large-particle lithium iron phosphate particle, the small-particle lithium iron phosphate particle, and a combination thereof may be represented by Chemical Formula 1.

Chemical Formula 1 LiₐFe₁₋ₓMₓPO₄

wherein, 0.90≤a≤1.8, 0≤x≤0.7, and wherein M is Mg, Co, Ni, Mn, or a combination thereof.

In the dry positive active material layer according to one or more embodiments, the polytetrafluoroethylene binder may be a fibrillated polytetrafluoroethylene. The polytetrafluoroethylene binder may be converted to a fiber shape, for example, fibrillated, if (e.g., when) a shear is applied, so that the binder is mixed with the positive active material. As a result, the shear that is applied thereto, may thereby entangle the fibrillated binder and the positive active material to prepare a dry positive active material layer, and enable the preparation of a dry positive electrode. Such a dry positive electrode may be prepared, in the case of utilizing both (e.g., simultaneously) the large-particle lithium iron phosphate particle and the small-particle lithium iron phosphate particle with different sizes as a positive active material. If (e.g., when) only small-particle lithium iron phosphate particle is utilized as the positive active material, it may be difficult to prepare a dry positive electrode due to the lack of fibrillation. If (e.g., when) only large-particle lithium iron phosphate particle is utilized as positive active material, it may be difficult to achieve sufficient fibrillation, such that cracks may occur in the particle and one or more side reactions with the electrolyte may be occur excessively during charging and discharging.

In one or more embodiments, an amount of the positive active material may be, based on 100 wt% of the dry positive active material layer, about 95 wt% to about 99.9 wt%, about 97 wt% to about 99.5 wt%, or about 97.4 wt% to about 99.4 wt%.

In one or more embodiments, an amount of the polytetrafluoroethylene binder may be, based on the total 100 wt% of the dry positive active material layer, about 0.1 wt% to about 5 wt%, about 0.5 wt% to about 3.0 wt%, or about 0.6 wt% to about 2.6 wt%. If (e.g., when) the amount of the polytetrafluoroethylene binder is within the described corresponding range, the dry positive active material layer may be effectively prepared.

The dry positive active material layer may optionally include a conductive material. In case of further including the conductive material in the positive active material layer, based on the total 100 wt% of the dry positive active material layer, an amount of the positive active material may be about 90 wt% to about 99 wt%, about 94 wt% to about 99 wt%, or about 96 wt% to about 99 wt%, an amount of the binder may be about 0.5 wt% to about 5 wt%, about 0.5 wt% to about 3 wt%, or about 0.5 wt% to about 2 wt%, an amount of the conductive material may be about 0.5 wt% to about 5 wt%, about 0.5 wt% to about 3 wt%, or 0.5 wt% to about 2 wt%.

The conductive material is included to provide electrode conductivity, and any electrically conductive material may be utilized as a conductive material unless it causes a chemical change. Examples of the conductive material include a carbon-based material such as natural graphite, artificial graphite, carbon black, acetylene black, ketjen black, a carbon fiber, and/or the like; a metal-based material of a metal powder or a metal fiber including copper, nickel, aluminum, silver, and/or the like; a conductive polymer such as a polyphenylene derivative; or a mixture thereof. The carbon black may be, for example, acetylene black, ketjen black, channel black, furnace black, lamp black, thermal black, or a combination thereof.

The current collector may be AI, but is not limited thereto.

The positive electrode according to one or more embodiments may have an energy density of about 400 watt hour per liter (Wh/L) to about 490 Wh/L. In one or more embodiments, the energy density of the positive electrode may be about 400 Wh/L to about 450 Wh/L, or about 450 Wh/L to about 480 Wh/L. As such, the positive electrode according to one or more embodiments may have high energy density.

A loading level of the dry positive active material layer may be about 40 milligram per square centimeter (mg/cm²) to about 90 mg/cm², or about 40 mg/cm² to about 80 mg/cm². The dry positive active material layer according to one or more embodiments, as such, may have a high loading level.

In one or more embodiments, the positive electrode may have a high current density of about at least 5 milliampere hour per square centimeter (mAh/cm²). In one or more embodiments, the current density of the positive electrode may be about 5 mAh/cm² to about 8 mAh/cm², or about 6 mAh/cm² to about 8 mAh/cm².

### Preparation of positive electrode

A positive electrode according to one or more embodiments may be prepared (e.g., by utilizing a dry mixing process) as follows.

A large-particle lithium iron phosphate particle and a small-particle lithium iron phosphate particle are mixed to prepare a positive active material. The positive active material and a polytetrafluoroethylene binder, and optionally a conductive material, are dry mixed and the resulting mixture is extruded to prepare a dry positive active material layer. The dry mixing process refers to a process that excludes (e.g., does not include) utilization of a solvent. The dry mixing process may be performed at a speed of about 1000 rpm to about 10000 rpm, about 1500 rpm to about 8000 rpm, or about 2000 rpm to about 7000 rpm and may be performed for about 1 minute to about 30 minutes. In the dry mixing process, the polytetrafluoroethylene binder may be fibrillated.

The dry positive active material layer may be a sheet-type or kind and may be a self-standing film.

The dry positive active material layer is adhered to a current collector, thereby preparing the positive electrode. The adhering process may be a laminate process, but is not limited thereto.

### Rechargeable lithium battery

A rechargeable lithium battery may include a negative electrode, the positive electrode as described herein, and a non-aqueous-based electrolyte.

### Negative electrode

The negative electrode includes a current collector and a negative active material layer on the current collector.

The negative active material layer includes a negative active material.

The negative active material includes a material that may reversibly intercalate/deintercalate lithium ions, a lithium metal, a lithium metal alloy, a material capable of doping/dedoping lithium, and/or a transition metal oxide.

The material that reversibly intercalates/deintercalates lithium ions may be a carbon material, and for example, crystalline carbon, amorphous carbon, or a combination thereof. The crystalline carbon may be unspecified shaped, sheet, flake, spherical, or fiber shaped natural graphite or artificial graphite, and the amorphous carbon may be a soft carbon, a hard carbon, a mesophase pitch carbonization product, fired coke, and/or the like.

The lithium metal alloy includes an alloy of lithium and at least one metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material, or a Sn-based negative active material. The Si-based negative active material may be silicon, a silicon-carbon (i.e., Si-C) composite, SiOₓ (0 < x ≤ 2), a Si-Q alloy (wherein Q is an element selected from among an alkali metal, an alkaline-earth metal, a Group 13 element, a Group 14 element (except for Si) a Group 15 element, a Group 16 element, a transition metal, a rare earth element, and a combination thereof), or a combination thereof. The Sn-based negative active material may be Sn, SnO₂, a Sn-based alloy, or a combination thereof.

The silicon-carbon composite may be a composite of silicon and amorphous carbon. According to one or more embodiments, the silicon-carbon composite may include silicon particles and an amorphous carbon coated on the surfaces of the silicon particles. For example, the silicon-carbon composite may include a secondary particle in which silicon primary particles are agglomerated and an amorphous carbon coating layer positioned on the secondary particle. The amorphous carbon is (e.g., is also) positioned between the silicon primary particles, for example, to coat (e.g., provide a coating) on the silicon primary particles. The secondary particle may be presented by distributing in an amorphous carbon matrix.

The silicon-carbon composite may further include crystalline carbon. For example, the silicon-carbon composite may include a core (e.g., the secondary particle) including crystalline carbon and silicon particles (e.g., the silicon primary particles), and an amorphous carbon coating layer on the surface of the core.

In some embodiments, the silicon particles (e.g., the silicon primary particles) may be silicon nano particles (e.g., particles in nanometer scale).

A particle diameter of the silicon nano particles may be about 10 nanometer (nm) to about 1000 nm, or according to another embodiments, may be about 10 nm to about 200 nm, or about 20 nm to about 150 nm. If (e.g., when) the particle diameter of the silicon nano particles is within the corresponding range, extreme volume expansion caused during charge and discharge may be suppressed or reduced, and a breakage of the conductive path due to crushing of particle may be prevented or reduced.

In the negative active material according to one or more embodiments, the silicon-carbon composite may include silicon nano particle as a core and an amorphous carbon coating layer on the surface of the silicon nano particles. The silicon-carbon composite may include an agglomerated product where at least one (e.g., two or more) of the silicon nano particles are agglomerated and an amorphous carbon coating layer on the surface of the agglomerated product.

In the amorphous carbon coating layer, the amorphous carbon may be soft carbon, hard carbon, mesophase pitch carbide, sintered cokes, or a combination thereof. A thickness of the amorphous carbon coating layer may be about 1 nm to about 2 µm, about 1 nm to about 500 nm, about 10 nm to about 300 nm, or about 20 nm to about 200 nm. If (e.g., when) the thickness of the amorphous carbon coating layer is within the corresponding range, the volume expansion of silicon may be effectively suppressed or reduced during charging and discharging.

The crystalline carbon may be graphite such as unspecified shape, sheet, flake, spherical or fiber shaped natural graphite or artificial graphite.

If (e.g., when) the silicon-carbon composite includes the silicon nano particles and the amorphous carbon coating layer, based on the total 100 wt% of the silicon-carbon composite, an amount of the silicon nano particles may be about 30 wt% to about 70 wt%, or about 40 wt% to about 65 wt%. An amount of the amorphous carbon coating layer may be, based on the total 100 wt% of the silicon-carbon composite, about 30 wt% to about 70 wt%, or about 35 wt% to about 60 wt%.

In case of further including the crystalline carbon in the silicon-carbon composite, based on the total 100 wt% of the silicon-carbon composite, an amount of the silicon nano particles may be about 20 wt% to about 70 wt%, or about 25 wt% to about 65 wt%. Based on the total 100 wt% of the silicon-carbon composite, an amount of the amorphous carbon may be about 25 wt% to about 70 wt%, or about 25 wt% to about 60 wt%, and an amount of the crystalline carbon may be about 1 wt% to about 20 wt%, or about 5 wt% to about 15 wt%.

In the negative active material layer, an amount of the negative active material may be about 95 wt% to about 98 wt% based on the total 100 wt% of the negative active material layer.

The negative active material layer may include a binder, and may further include a conductive material. An amount of the binder may be about 1 wt% to about 5 wt% based on the total 100 wt% of the negative active material layer. An amount of the conductive material may be about 1 wt% to about 5 wt% based on the total 100 wt% of the negative active material layer.

The binder improves binding properties of negative active material particles with one another and with a current collector. The binder may include a non-aqueous binder, an aqueous binder, a dry binder, or a combination thereof.

The non-aqueous-based binder may include polyvinylchloride, carboxylated polyvinylchloride, polyvinyl fluoride, an ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acryl resin, a phenol resin, an epoxy resin, polyvinyl alcohol, or a combination thereof.

The negative electrode binder may include a cellulose-based compound, or may include the cellulose-based compound together the aqueous binder. The cellulose-based compound includes one or more of carboxymethyl cellulose, hydroxypropylmethyl cellulose, methyl cellulose, or alkali metal salts thereof. The alkali metal may be Na, K, or Li. The cellulose-based compound may serve as a binder and may serve as a thickener for increasing (e.g., imparting a greater) viscosity. An amount of the cellulose-based compound may be appropriately adjusted within the amount of the binder, but for example, the amount may be about 0.1 parts by weight to about 3 parts by weight based on 100 parts by weight of the negative active material.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be utilized as a conductive material unless it causes a chemical change. Examples of the conductive material may include a carbon-based material such as natural graphite, artificial graphite, carbon black, acetylene black, ketjen black, a carbon fiber, a carbon nanofiber, carbon nanotubes, and/or the like; a metal-based material of a metal powder or a metal fiber including copper, nickel, aluminum, silver, and/or the like; a conductive polymer such as a polyphenylene derivative; or a mixture thereof.

The current collector may include at least one selected from among a copper foil, a nickel foil, a stainless steel foil, a titanium foil, a nickel foam, a copper foam, a polymer substrate coated with a conductive metal, and a combination thereof.

### Electrolyte

In some embodiments, the electrolyte includes a non-aqueous organic solvent and a lithium salt.

The non-aqueous organic solvent may be or serve as a medium for transmitting ions taking part (e.g., participating) in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), fluoroethylene carbonate (FEC), propylene carbonate (PC), butylene carbonate (BC), and/or the like. The ester-based solvent may include methyl acetate, ethyl acetate, n-propyl acetate, dimethyl acetate, methylpropionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes; and/or the like.

The non-aqueous organic solvent may be utilized alone or in combination of two or more.

If (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂)(wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both (e.g., opposite) surfaces of the porous substrate.

The porous substrate may be a polymer film formed of any one selected from among polyolefin such as polyethylene, polypropylene, and/or the like, polyester such as polyethylene terephthalate, polybutylene terephthalate, and/or the like, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg (OH)₂, and boehmite, or a combination thereof, but is not limited thereto.

The organic material and the inorganic material may be mixed in one coating layer, or a coating layer including an organic material and a coating layer including an inorganic material may be stacked.

The rechargeable lithium battery may be classified into a lithium ion battery, a lithium ion polymer battery, or a lithium polymer battery depending on the types (kinds) of the separator and the electrolyte that are utilized. The rechargeable lithium battery may be classified into cylindrical, prismatic, coin-type or kind, or pouch-type or kind depending on the shape. The rechargeable lithium battery may be classified into a bulk type or kind or a thin film type or kind depending on a size. The structure and fabrication of such batteries are disclosed in the related arts, and thus, are not described in further detail.

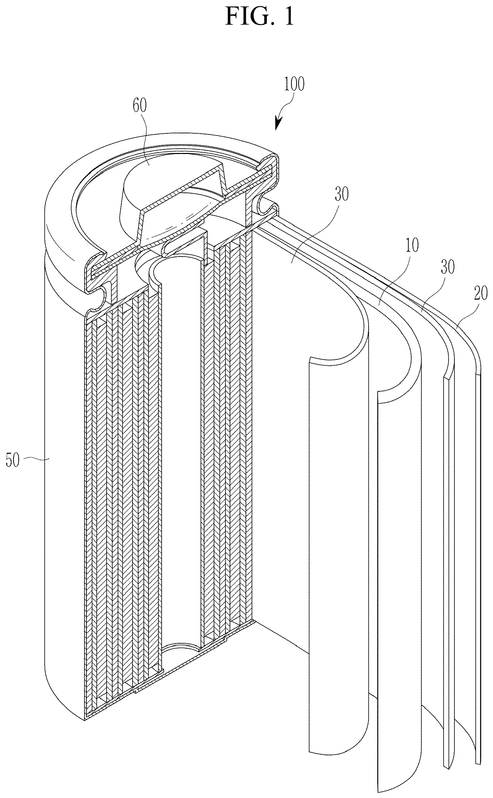

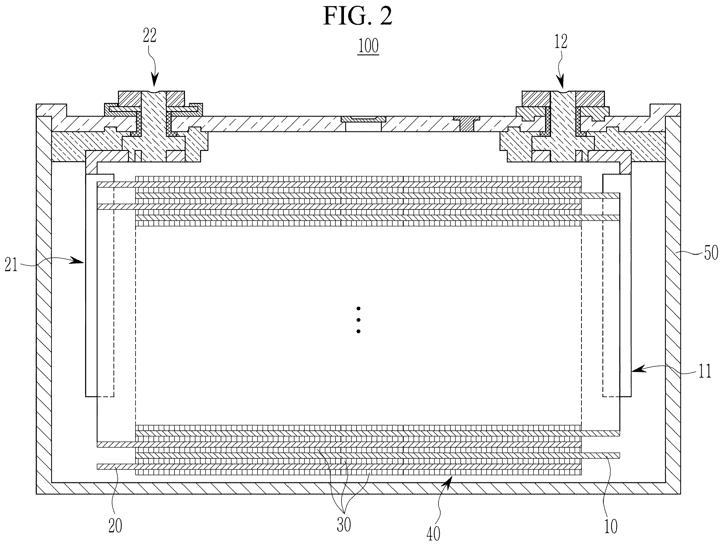

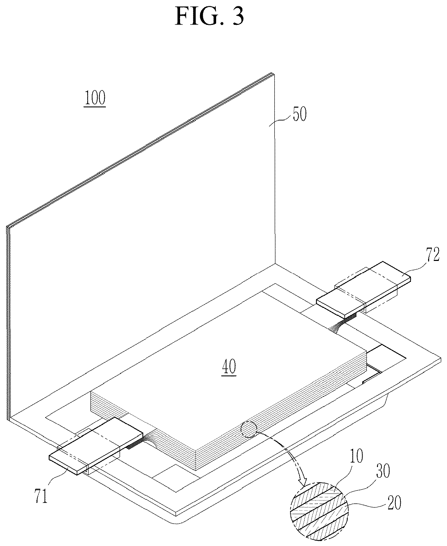

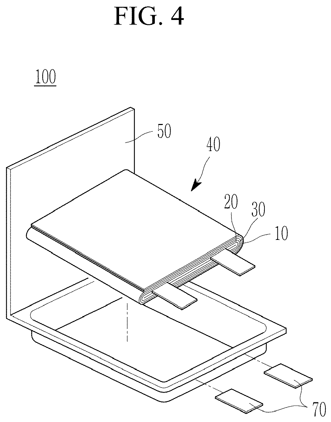

The rechargeable lithium battery may be classified into cylindrical, prismatic, pouch-type or kind, or coin-type or kind batteries, and/or the like depending on their shape. FIGS. 1 to 4 are schematic views illustrating a rechargeable lithium battery according to one or more embodiments. FIG. 1 shows a cylindrical battery, FIG. 2 shows a prismatic battery, and FIG. 3 and FIG. 4 each show a pouch-type or kind battery. Referring to FIG. 1 to FIG. 4, the rechargeable lithium battery 100 may include an electrode assembly including a separator 30 between a positive electrode 10 and a negative electrode 20, and a case 50 in which the electrode assembly is included. The positive electrode 10, the negative electrode 20, and the separator 30 may be impregnated with an electrolyte. The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Example.

### EXAMPLES

### Example 1

A large-particle LiFePO₄ particle with an average particle diameter D50 of 5 micrometer (µm) and a small-particle LiFePO₄ particle with an average particle diameter D50 of 0.5 µm were mixed at a weight ratio of 6:4 to prepare a positive active material.

90 wt% of the positive active material, 5 wt% of a polytetrafluoroethylene binder, and 5 wt% of a Ketjen black conductive material were dry mixed at a speed of 5000 rpm for 10 minutes and the mixture was extruded to prepare a sheet-type or kind self-standing film positive active material layer.

The positive active material layer was laminated on an Al foil current collector to prepare a positive electrode. In the prepared positive electrode, the positive active material layer had a loading level of 40 milligram per square centimeter (mg/cm²), and the polytetrafluoroethylene binder was a fibrillated polytetrafluoroethylene.

98 wt% of a natural graphite negative active material, 1 wt% of a styrene butadiene rubber, and 1 wt% of carboxymethyl cellulose were mixed in a water solvent to prepare a negative active material layer slurry. The negative active material layer slurry was coated on a Cu foil current collector, dried, and pressurized to prepare a negative electrode.

Utilizing the positive electrode, the negative electrode, and an electrolyte, a full (battery) cell with a volume of 0.96 L was fabricated. The electrolyte was utilized by dissolving 1 M LiPF₆ in a mixture of ethylene carbonate, ethylmethyl carbonate, and diethyl carbonate (2:1:7 volume ratio) to prepare a mixed solvent and adding 3.5 wt% of fluoroethylene carbonate based on the total weight of the mixed solvent, to the mixed solvent.

### Example 2

A positive electrode and a full cell with a volume of 0.96 L were fabricated by the same procedure as in Example 1, except that the large-particle LiFePO₄ particle with an average particle diameter D50 of 5 µm and the small-particle LiFePO₄ particle with an average particle diameter D50 of 0.5 µm were mixed at a weight ratio of 65:35. In the prepared positive electrode, the positive active material layer had a loading level of 60 mg/cm², and the polytetrafluoroethylene binder was a fibrillated polytetrafluoroethylene.

### Example 3:

A positive electrode and a full cell with a volume of 0.96 L were fabricated by the same procedure as in Example 1, except that a large-particle LiFePO₄ particle with an average particle diameter D50 of 10 µm and a small-particle LiFePO₄ particle with an average particle diameter D50 of 1 µm were utilized. In the prepared positive electrode, the positive active material layer had a loading level of 70 mg/cm², and the polytetrafluoroethylene binder was a fibrillated polytetrafluoroethylene.

### Example 4

A positive electrode and a full cell with a volume of 0.96 L were fabricated by the same procedure as in Example 1, except that the large-particle LiFePO₄ particle with an average particle diameter D50 of 10 µm and the small-particle LiFePO₄ particle with an average particle diameter D50 of 2.0 µm were utilized. In the prepared positive electrode, the positive active material layer had a loading level of 80 mg/cm², and the polytetrafluoroethylene binder was a fibrillated polytetrafluoroethylene.

### Comparative Example 1

A large-particle LiFePO₄ particle with an average particle diameter D50 of 5 µm and a small-particle LiFePO₄ particle with an average particle diameter D50 of 0.5 µm were mixed at a weight ratio of 60:40 to prepare a positive active material.

98 wt% of the positive active material, 1 wt% of a polytetrafluoroethylene binder, and 1 wt% of a Ketjen black conductive material were mixed in an N-methyl pyrrolidone solvent to prepare a positive active material layer slurry.

The positive active material layer was laminated on an Al foil current collector to prepare a positive electrode. In prepared positive electrode, the positive active material layer had a loading level of 30 mg/cm².

Utilizing the positive electrode, a full (battery) cell with a volume of 0.96 L was fabricated by the same procedure as in Example 1.

### Comparative Example 2

A positive electrode and a full cell with a volume of 0.96 L were fabricated by the same procedure as in Comparative Example 1, except that the large-particle LiFePO₄ particle with an average particle diameter D50 of 20 µm and the small-particle LiFePO₄ particle with an average particle diameter D50 of 2.5 µm were utilized and a polyvinylidene fluoride binder was utilized instead of the polytetrafluoroethylene binder. In the prepared positive electrode, the positive active material layer had a loading level of 35 mg/cm².

### Comparative Example 3

A positive electrode and a full cell with a volume of 0.96 L were fabricated by the same procedure as in Example 1, except that a large-particle LiFePO₄ particle with an average particle diameter D50 of 30 µm was only utilized as a positive active material. In the prepared positive electrode, the positive active material layer had a loading level of 38 mg/cm².

### Comparative Example 4

A positive electrode and a full cell with a volume of 0.96 L were fabricated by the same procedure as in Example 1, except that a small-particle LiFePO₄ particle with an average particle diameter D50 of 0.05 µm was only utilized as a positive active material. In the prepared positive electrode, the positive active material layer had a loading level of 25 mg/cm².

### Experimental Example 1 - Evaluation of current density mAh/cm²

The current densities of the positive electrodes according to Examples 1 to 4 and Comparative Examples 1 to 4 were calculated by Equation 1. For example, if (e.g., when) the current density of Example 1 was calculated by Equation 1, it was 40 (milligram per square centimeter (mg/cm²)) * 90(%) * 140 (milliampere hour per gram (mAh/g)) = 5 (milliampere hour per square centimeter (mAh/cm²)). 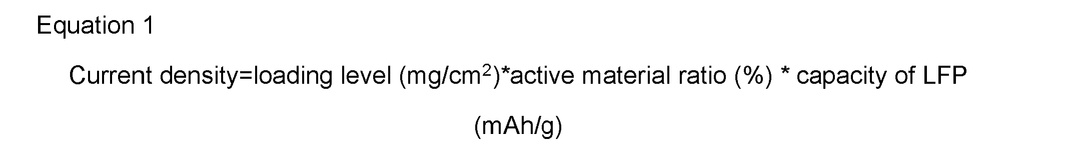 Current density=loading level (mg/cm2)*active material ratio (%) * capacity of LFP (mAh/g) Equation 1

In Equation 1, the capacity of LFP of is an experimental capacity of LiFePO₄ and is 140 mAh/g.

### Experimental Example 2 - Evaluation of energy density (Wh/L)

The energy densities of the half-cells according to Examples 1 to 4 and Comparative Examples 1 to 4 were calculated by Equation 2. The results are shown in Table 1. For example, if (e.g., when) the energy density of Example 1 was calculated by Equation 2, it was 3.2 (V) * 135 (ampere hour (Ah)) / 0.96 (L) = 450 (watt hour per liter (Wh/L)). 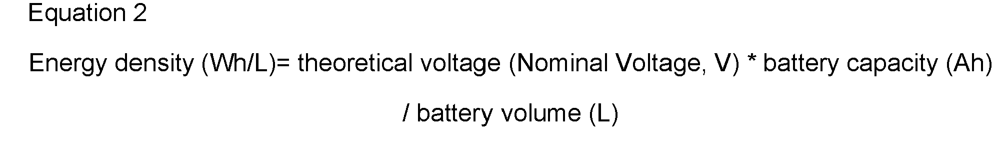 Energy density (Wh/L)= theoretical voltage (Nominal Voltage, V) * battery capacity (Ah) / battery volume (L ) Equation 2

In Equation 2, the battery capacity was obtained from the current density obtained from Example 1.

**Table 1**

| | Loading **level** (mg/cm²) | Energy density (Wh/L) | Current density (mAh/cm²) | Battery capacity (Ah) |
|---|---|---|---|---|
| Example 1 | 40 | 450 | 5 | 135 |
| Example 2 | 60 | 470 | 7.6 | 141 |
| Example 3 | 70 | 480 | 8.8 | 144 |
| Example 4 | 80 | 490 | 10 | 147 |
| Comparative Example 1 | 30 | 370 | 3.8 | 111 |
| Comparative Example 2 | 35 | 380 | 4.4 | 114 |
| Comparative Example 3 | 38 | 390 | 4.8 | 117 |
| Comparative Example 4 | 25 | 350 | 3.2 | 105 |

As shown in Table 1, in Examples 1 to 4, the positive electrodes each with a loading level of 40 mg/cm² or more were prepared, and thus, the current densities of the positive electrode were each exhibited at a high current density of 5 mAh/cm² or more. As a result, the positive electrode with a high energy density of 450 Wh/L or more may be prepared, and resultantly, a cell with a high capacity of 135 Ah or more may be prepared.

Whereas, the positive electrodes of Comparative Examples 1 and 2, that were each prepared by a wet process, exhibited low loading levels of 30 mg/cm² and 35 mg/cm², and, resultantly, they exhibited each of (e.g., all) low current density, low energy density, and low battery capacity.

Comparative Example 3 was prepared utilizing only the large-particle LiFePO₄ particle, and even if (e.g., when) the positive electrode was prepared by a dry process, exhibited a slightly increased loading level of 38 mg/cm², which was still lower than Examples 1 to 4. Thus, the current density, energy density, and battery capacity were all lower than Examples 1 to 4. In Comparative Example 4, prepared utilizing only the small-particle LiFePO₄ particle, the positive electrode had an extremely low loading level of 25 mg/cm², and thus, current density, energy density, and battery capacity were each (e.g., all) significantly low.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device utilizing a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this present disclosure has been described in connection with what is presently considered to be practical example embodiments, it is to be understood that the present disclosure is not limited to the disclosed embodiments, but, on the contrary, is intended to cover one or more suitable modifications and equivalent arrangements included within the scope of the appended claims, and equivalents thereof. Therefore, the aforementioned embodiments should be understood to be examples but not limiting the present disclosure in any way.

### <Description of Symbols>

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode (10), the positive electrode (10) comprising:
a dry positive active material layer comprising:
a positive active material comprising a large-particle lithium iron phosphate particle and a small-particle lithium iron phosphate particle;
and
a polytetrafluoroethylene binder,
wherein the positive electrode (10) is for a rechargeable lithium battery (100),
wherein the size of the large-particle lithium iron phosphate particle is 2.5 micrometer (µm) to 20 µm and
wherein the size of the small-particle lithium iron phosphate particle is 0.1 µm to 2.5 µm, whereby the particle size is measured by dynamic light-scattering.

2. The positive electrode (10) as claimed in claim 1, wherein a mixing ratio of the large-particle lithium iron phosphate particle and the small-particle lithium iron phosphate particle is a weight ratio of 99:1 to 60:40.

3. The positive electrode (10) as claimed in claim 1 or 2, wherein a size of the large-particle lithium iron phosphate particle is larger than a size of the small-particle lithium iron phosphate particle.

4. The positive electrode (10) as claimed in any of the claims 1 to 3, wherein a ratio of the size of the large-particle lithium iron phosphate particle to the size of the small-particle lithium iron phosphate particle is 1.5:1 to 19:1.

5. The positive electrode (10) as claimed in any of the claims 1 to 4, wherein the polytetrafluoroethylene binder comprises fibrillated polytetrafluoroethylene.

6. The positive electrode (10) as claimed in any of the claims 1 to 5, wherein the large-particle lithium iron phosphate particle and the small-particle lithium iron phosphate particle are identical or different, and at least one selected from among the large-particle lithium iron phosphate particle, the small-particle lithium iron phosphate particle, and a combination thereof is represented by Chemical Formula 1:
[Chemical Formula 1] LiₐFe₁₋ₓMₓPO₄,
and
wherein, 0.90≤a≤1.8, 0≤x≤0.7, and
M is Mg, Co, Ni, Mn, or a combination thereof.

7. The positive electrode (10) as claimed in any of the claims 1 to 6, wherein an amount of the polytetrafluoroethylene binder is 0.1 wt% to 5.0 wt% based on 100 wt% of the dry positive active material layer.

8. The positive electrode (10) as claimed in any of the claims 1 to 7, wherein the dry positive active material layer further comprises a conductive material.

9. The positive electrode (10) as claimed in any of the claims 1 to 8, wherein the dry positive active material layer has a loading level of 40 milligram per square centimeter (mg/cm²) to 90 mg/cm².

10. A rechargeable lithium battery (100), the rechargeable lithium battery (100) comprising:
the positive electrode (10) as claimed in any one of claim 1 to claim 9;
a negative electrode (20); and
a non-aqueous electrolyte.

## Patentansprüche

1. Positive Elektrode (10), wobei die positive Elektrode (10) aufweist:
eine trockene Schicht aus positivem aktivem Material, aufweisend:
ein positives aktives Material, das Lithium-Eisenphosphatpartikel mit großer Partikelgröße und Lithium-Eisenphosphatpartikel mit kleiner Partikelgröße enthält; und
ein Polytetrafluorethylen-Bindemittel,
wobei die positive Elektrode (10) für eine wiederaufladbare Lithiumbatterie (100) vorgesehen ist,
wobei die Größe der Lithium-Eisenphosphatpartikel mit großer Partikelgröße 2,5 Mikrometer (µm) bis 20 µm beträgt, und
wobei die Größe der Lithium-Eisenphosphatpartikel mit kleiner Partikelgröße 0,1 µm bis 2,5 µm beträgt, wobei die Partikelgröße mittels dynamischer Lichtstreuung gemessen wird.

2. Positive Elektrode (10) nach Anspruch 1, wobei das Mischungsverhältnis der Lithium-Eisenphosphatpartikel mit großer Partikelgröße und der Lithium-Eisenphosphatpartikel mit kleiner Partikelgröße ein Gewichtsverhältnis von 99:1 bis 60:40 ist.

3. Positive Elektrode (10) nach Anspruch 1 oder 2, wobei die Größe der Lithium-Eisenphosphatpartikel mit großer Partikelgröße größer ist als die Größe der Lithium-Eisenphosphatpartikel mit kleiner Partikelgröße.

4. Positive Elektrode (10) nach einem der Ansprüche 1 bis 3, wobei das Verhältnis der Größe der Lithium-Eisenphosphatpartikel mit großer Partikelgröße zur Größe der Lithium-Eisenphosphatpartikel mit kleiner Partikelgröße 1,5:1 bis 19:1 beträgt.

5. Positive Elektrode (10) nach einem der Ansprüche 1 bis 4, wobei das Polytetrafluorethylen-Bindemittel fibrilliertes Polytetrafluorethylen aufweist.

6. Positive Elektrode (10) nach einem der Ansprüche 1 bis 5, wobei die Lithium-Eisenphosphatpartikel mit großer Partikelgröße und die Lithium-Eisenphosphatpartikel mit kleiner Partikelgröße identisch oder unterschiedlich sind und mindestens eine Option, ausgewählt aus den Lithium-Eisenphosphatpartikeln mit großer Partikelgröße, den Lithium-Eisenphosphatpartikeln mit kleiner Partikelgröße und einer Kombination davon durch die chemische Formel 1 dargestellt wird:
[chemische Formel 1] Lia_{F}e1_{-xM}x_{P}O4_{,}
wobei 0,90 ≤ a ≤ 1,8, 0 ≤ x ≤ 0,7, und
M Mg, Co, Ni, Mn oder eine Kombination davon ist.

7. Positive Elektrode (10) nach einem der Ansprüche 1 bis 6, wobei der Anteil des Polytetrafluorethylen-Bindemittels 0,1 Gew.-% bis 5,0 Gew.-%, bezogen auf 100 Gew.-% der trockenen Schicht aus positivem aktivem Material, beträgt.

8. Positive Elektrode (10) nach einem der Ansprüche 1 bis 7, wobei die trockene Schicht aus positivem aktivem Material ferner ein leitfähiges Material aufweist.

9. Positive Elektrode (10) nach einem der Ansprüche 1 bis 8, wobei die trockene Schicht aus positivem aktivem Material einen Beladungsgrad von 40 Milligramm pro Quadratzentimeter (mg/cm²) bis 90 mg/cm² aufweist.

10. Wiederaufladbare Lithiumbatterie (100), wobei die wiederaufladbare Lithiumbatterie (100) aufweist:
die positive Elektrode (10) nach einem der Ansprüche 1 bis 9;
eine negative Elektrode (20); und
einen nichtwässrigen Elektrolyten.

## Revendications

1. Électrode positive (10), l'électrode positive (10) comprenant :
une couche de matière active positive sèche comprenant :
un matériau actif positif comprenant une particule de phosphate de fer-lithium à grosses particules et une particule de phosphate de fer-lithium à petites particules ; et
un liant en polytétrafluoroéthylène,
dans laquelle l'électrode positive (10) est destinée à une batterie rechargeable au lithium (100),
dans laquelle la taille de la particule de phosphate de fer-lithium à grosses particules est comprise entre 2,5 micromètres (µm) et 20 µm et
dans laquelle la taille de la particule de phosphate de fer-lithium à petites particules est comprise entre 0,1 µm et 2,5 µm, la taille des particules étant mesurée par diffusion dynamique de la lumière.

2. Électrode positive (10) selon la revendication 1, dans laquelle un rapport de mélange de la particule de phosphate de fer-lithium à grosses particules et de la particule de phosphate de fer-lithium à petites particules est un rapport pondéral compris entre 99:1 et 60:40.

3. Électrode positive (10) selon la revendication 1 ou 2, dans laquelle une taille de la particule de phosphate de fer-lithium à grosses particules est supérieure à une taille de la particule de phosphate de fer-lithium à petites particules.

4. Électrode positive (10) selon l'une quelconque des revendications 1 à 3, dans laquelle un rapport entre la taille de la particule de phosphate de fer-lithium à grosses particules et la taille de la particule de phosphate de fer-lithium à petites particules est compris entre 1,5:1 à 19:1.

5. Électrode positive (10) selon l'une quelconque des revendications 1 à 4, dans laquelle le liant en polytétrafluoroéthylène comprend du polytétrafluoroéthylène fibrillé.

6. Électrode positive (10) selon l'une quelconque des revendications 1 à 5, dans laquelle la particule de phosphate de fer-lithium à grosses particules et la particule de phosphate de fer-lithium à petites particules sont identiques ou différentes, et au moins un élément sélectionné parmi la particule de phosphate de fer-lithium à grosses particules, la particule de phosphate de fer-lithium à petites particules et une combinaison de celles-ci est représenté par la Formule chimique 1 :
[Formule chimique 1] LiaFe1₋x_{M}x_{P}O4_{,}
et
dans laquelle 0,90≤a≤1,8, 0≤x≤0,7, et
M est Mg, Co, Ni, Mn, ou une combinaison de ceux-ci.

7. Électrode positive (10) selon l'une quelconque des revendications 1 à 6, dans laquelle une quantité du liant en polytétrafluoroéthylène est comprise entre 0,1 % en poids et 5,0 % en poids sur la base de 100 % en poids de la couche de matière active positive sèche.

8. Électrode positive (10) selon l'une quelconque des revendications 1 à 7, dans laquelle la couche de matière active positive sèche comprend en outre un matériau conducteur.

9. Électrode positive (10) selon l'une quelconque des revendications 1 à 8, dans laquelle la couche de matière active positive sèche présente une charge surfacique comprise entre 40 milligrammes par centimètre carré (mg/cm²) et 90 mg/cm².

10. Batterie rechargeable au lithium (100), la batterie rechargeable au lithium (100) comprenant :
l'électrode positive (10) selon l'une quelconque des revendications 1 à 9 ;
une électrode négative (20) ; et
un électrolyte non aqueux.
